# EUROPEAN PATENT APPLICATION

(11) **EP 4 300 967 A2**
(43) Date of publication of application: **03.01.2024**
(21) Application number: 23210579.1
(22) Date of filing: 30.06.2017
(51) Int. Cl.: H04N 19/593

(54) **ERROR RESILIENCE AND PARALLEL PROCESSING FOR DECODER SIDE MOTION VECTOR DERIVATION**

(62) Divisional of application: 17734332.4
(71) Applicant: Huawei Technologies Co., Ltd., Shenzhen, Guangdong 518129 (CN)
(72) Inventor: ESENLIK, Semih, 80992 Munich (DE); ZHAO, Zhijie, 80992 Munich (DE); KOTRA, Anand Meher, 80992 Munich (DE)
(74) Representative: Körber, Martin Hans

(57) **Abstract**

The present disclosure relates to inter-prediction in which it is determined whether or not a motion vector of a block neighbor to the current block has been determined by the template matching (as used for instance in decoder-based motion vector derivation and/or refinement). If detected negatively, prediction of the current block is derived according to the motion vector of the neighbor block. On the other hand, if detected positively, the prediction of the current block is not based on the neighbor block.

## Description

The present invention relates to derivation of motion vectors at the decoder and in particular to methods and apparatuses for motion vector derivation which may be also used in image coding and decoding.

### BACKGROUND

Current hybrid video codecs employ predictive coding. A picture of a video sequence is subdivided into blocks of pixels and these blocks are then coded. Instead of coding a block pixel by pixel, the entire block is predicted using already encoded pixels in the spatial or temporal proximity of the block. The encoder further processes only the differences between the block and its prediction. The further processing typically includes a transformation of the block pixels into coefficients in a transformation domain. The coefficients may then be further compressed by means of quantization and further compacted by entropy coding to form a bitstream. The bitstream further includes any signaling information which enables the decoder to decode the encoded video. For instance, the signaling may include settings concerning the encoder settings such as size of the input picture, frame rate, quantization step indication, prediction applied to the blocks of the pictures, or the like.

Temporal prediction exploits temporal correlation between pictures, also referred to as frames, of a video. The temporal prediction is also called inter-prediction, as it is a prediction using the dependencies between (inter) different video frames. Accordingly, a block being encoded, also referred to as a current block, is predicted from (one or) more previously encoded picture(s) referred to as a reference picture. The reference picture is not necessarily a picture preceding the current picture in which the current block is located in the displaying order of the video sequence. The encoder may encode the pictures in a coding order different from the displaying order. As a prediction of the current block, a co-located block in a reference picture may be determined. The co-located block is a block which is located in the reference picture on the same position as the current block in the current picture. Such prediction is accurate for motionless picture regions, i.e. picture regions without movement from one picture to another.

In order to obtain a predictor which takes into account the movement, i.e. a motion compensated predictor, motion estimation is typically employed when determining the prediction of the current block. Accordingly, the current block is predicted by a block in the reference picture, which is located in a distance given by a motion vector from the position of the co-located block. In order to enable a decoder to determine the same prediction of the current block, the motion vector may be signaled in the bitstream. In order to further reduce the signaling overhead caused by signaling the motion vector for each of the blocks, the motion vector itself may be estimated. The motion vector estimation may be performed based on the motion vectors of the neighboring blocks in spatial and/or temporal domain.

The prediction of the current block may be computed using one reference picture or by weighting predictions obtained from two or more reference pictures. The reference picture may be an adjacent picture, i.e. a picture immediately preceding and/or the picture immediately following the current picture in the display order since adjacent pictures are most likely to be similar to the current picture. However, in general, the reference picture may be also any other picture preceding or following the current picture in the displaying order and preceding the current picture in the bitstream (decoding order). This may provide advantages for instance in case of occlusions and/or non-linear movement in the video content. The reference picture may thus be also signaled in the bitstream.

A special mode of the inter-prediction is a so-called bi-prediction in which two reference pictures are used in generating the prediction of the current block. In particular, two predictions determined in the respective two reference pictures are combined into a prediction signal of the current block. The bi-prediction may result in a more accurate prediction of the current block than the uni-prediction, i.e. prediction only using a single reference picture. The more accurate prediction leads to smaller differences between the pixels of the current block and the prediction (referred to also as "residuals"), which may be encoded more efficiently, i.e. compressed to a shorter bitstream.

In order to provide more accurate motion estimation, the resolution of the reference picture may be enhanced by interpolating samples between pixels. Fractional pixel interpolation can be performed by weighted averaging of the closest pixels. In case of half-pixel resolution, for instance a bilinear interpolation is typically used. Other fractional pixels are calculated as an average of the closest pixels weighted by the inverse of the distance between the respective closest pixels to the pixel being predicted.

The motion vector estimation is a computationally complex task in which a similarity is calculated between the current block and the corresponding prediction blocks pointed to by candidate motion vectors in the reference picture. In order to reduce the complexity, the number of candidate motion vectors is usually reduced by limiting the candidate motion vectors to a certain search space. The search space may be, for instance, defined by a number and/or positions of pixels surrounding the position in the reference picture corresponding to the position of the current block in the current image. On the other hand, the candidate motion vectors may be defined by a list of candidate motion vectors formed by motion vectors of neighboring blocks.

Motion vectors are usually at least partially determined at the encoder side and signaled to the decoder within the coded bitstream. However, the motion vectors may also be derived at the decoder. In such case, the current block is not available at the decoder and cannot be used for calculating the similarity to the blocks to which the candidate motion vectors point in the reference picture. Therefore, instead of the current block, a template is used which is construed out of pixels of already decoded blocks. For instance, already decoded pixels adjacent to the current block may be used. Such motion estimation provides an advantage of reducing the signaling: the motion vector is derived in the same way at both the encoder and the decoder and thus, no signaling is needed. On the other hand, the accuracy of such motion estimation may be lower.

In order to provide a tradeoff between the accuracy and signaling overhead, the motion vector estimation may be divided into two steps: motion vector derivation and motion vector refinement. For instance, a motion vector derivation may include selection of a motion vector from the list of candidates. Such a selected motion vector may be further refined for instance by a search within a search space. The search in the search space is based on calculating cost function for each candidate motion vector, i.e. for each candidate position of block to which the candidate motion vector points.

Document JVET-D0029: Decoder-Side Motion Vector Refinement Based on Bilateral Template Matching, X. Chen, J. An, J. Zheng (The document can be found at: http://phenix.it-sudparis.eu/jvet/ site) shows motion vector refinement in which a first motion vector in integer pixel resolution is found and further refined by a search with a half-pixel resolution in a search space around the first motion vector.

### SUMMARY

Starting from the above described approaches, the aim of the present disclosure is to provide an enhanced possibility of parallel decoding of processing units and/or increasing error resilience of the decoding.

In order to achieve this, the motion vectors of neighbors to a current block which have been derived by using template matching are not used to predict the motion vector of the current block.

In other words, motion vectors of neighbors which have been derived by using reference picture are not used to predict the motion vector of the current block.

This may be derivation and replacement using template matching. In the embodiments below, reference is made to application of "template matching". However, in general, any approach that uses reference picture may be considered as well.

According to an aspect of the invention, an apparatus is provided for determining a prediction of a current block, for reconstruction of the current block, the apparatus comprising: a prediction unit for detecting whether or not a motion vector of a block adjacent to the current block has been determined by the template matching, and configured to: if detected negatively, derive prediction of the current block according to the adjacent block, and, if detected positively, not to derive prediction of the current block according to the adjacent block.

Advantageously, for reconstruction of the current block, the prediction unit comprising: a motion vector candidate list determination unit for forming a list of candidate motion vectors for the current block including: detecting whether or not a motion vector of an adjacent block has been determined by the template matching, if detected negatively, including the motion vector of the adjacent block as a candidate into the list, if detected positively, not including the motion vector of the adjacent block as a candidate into the list; and a motion vector determination unit for selecting an estimate of a motion vector from the list and determining the motion vector of the current block according to the estimate.

For example, the apparatus the motion vector candidate list determination unit is configured to, if detected positively, including a replacement motion vector as a candidate into the list.

According to an example, the replacement motion vector is a motion vector of a block neighbor to the current block and different from the adjacent block.

The apparatus may further comprise a motion vector refinement unit for applying a refinement of the selected estimate of the motion vector; the motion vector candidate list determination unit is configured to, if detected positively, include into the list an estimate of the motion vector of the adjacent block obtained by the template matching before applying the refinement; and the motion vector determination unit is further configured to determine the motion vector of the adjacent block according to the estimate of the motion vector of the adjacent block after the refinement.

The motion vector candidate list determination unit may be configured to form the list for the current block while the motion vector refinement unit applies refinement to the adjacent block.

For example, the motion vector candidate list determination unit is configured to, if detected positively, if the adjacent block is located in the same picture as the current block, include into the list an estimate of the motion vector of the adjacent block obtained by the template matching before applying the refinement; and if the adjacent block is located in a picture other than the current block, include into the list the motion vector of the adjacent block after applying to the adjacent block the refinement.

Alternatively, the motion vector candidate list determination unit is further configured to check whether a motion vector to be included into the list is already included in the list, and not including it into the list if affirmative, and said checking is not performed when including into the list a motion vector of an adjacent block to be processed at least partially in parallel with the processing of the current block.

The apparatus may also serve for determining intra-prediction of a current block, for reconstruction of the current block. In such case, the prediction unit advantageously comprises: a reference sample determination unit for determining a set of reference samples for the current block including: detecting whether or not a motion vector of an adjacent block has been determined by the template matching, if detected negatively, including one or more samples of the adjacent block into the set of reference samples, and, if detected positively, not including any samples of the adjacent block into the set of reference samples. The prediction unit further includes an intra-prediction unit for providing the prediction of the current block according to samples from the set of reference samples.

According to an exemplary embodiment, the prediction unit is configured to, for reconstruction of the current block detect whether or not a motion vector of a surrounding block, which is located within a predetermined rectangular region defined with respect to the position of the current block, has been determined by the template matching.

According to an aspect of the invention, a video decoder for decoding a plurality of pictures from a bitstream, comprising: a bitstream parser for parsing the bitstream including control information, the apparatus according to any of exemplary embodiments described above, and a reconstruction unit for reconstructing the current block based on the prediction of the current block.

According to an aspect of the invention, a video encoder for encoding a plurality of pictures into a bitstream, comprising: the apparatus according to any of the above described embodiments and examples, a bitstream former for including into the bitstream control information, and a reconstruction unit for reconstructing the current block based on the prediction of the current block and storing the reconstructed block in a memory.

The video encoder or decoder may include a flag indicating whether or not the prediction unit is to detect whether or not a motion vector of an adjacent block has been determined by the template matching, and/or a replacement indicator indicating, if detected positively, how the prediction for the present block is determined.

For example, the control information is included in a sequence parameter set and/or in a slice header.

According to another aspect of the invention, a method is provided for determining a prediction of a current block, the method comprising the steps of detecting whether or not a motion vector of an adjacent block has been determined by the template matching, if detected negatively, deriving prediction of the current block according to the adjacent block, and, if detected positively, not deriving prediction of the current block according to the adjacent block.

The method may further comprise for reconstruction of the current block the steps of detecting whether or not a motion vector of a block adjacent to the current block has been determined by the template matching including the steps of, if detected negatively, deriving prediction of the current block according to the adjacent block; and, if detected positively, not deriving prediction of the current block according to the adjacent block.

The method may further comprise the steps of forming a list of candidate motion vectors for the current block including: detecting whether or not a motion vector of an adjacent block has been determined by the template matching; if detected negatively, including the motion vector of the adjacent block as a candidate into the list; and, if detected positively, not including the motion vector of the adjacent block as a candidate into the list. Moreover, there may be a step of selecting an estimate of a motion vector from the list and determining the motion vector of the current block according to the estimate.

The step of forming a list of candidate motion vectors may comprise, if detected positively, including a replacement motion vector as a candidate into the list. The replacement motion vector is, for example, a motion vector of a block neighbor to the current block and different from the adjacent block. According to another example, it is a motion vector of a block adjacent to a neighboring block of the current block but not adjacent to the current block.

The method of the present invention may comprise the steps of applying a refinement of the selected estimate of the motion vector; if detected positively, including into the list an estimate of the motion vector of the adjacent block obtained by the template matching before applying the refinement; and determining the motion vector of the adjacent block according to the estimate of the motion vector of the adjacent block after the refinement.

The list for the current block may be formed while the motion vector refinement unit applies refinement to the adjacent block.

According to an exemplary embodiment, if detected positively that the adjacent block used reference picture (template matching) for the determination of its motion vector, if the adjacent block is located in the same picture as the current block, include into the list an estimate of the motion vector of the adjacent block obtained by the template matching before applying the refinement; and if the adjacent block is located in a picture other than the current block, include into the list the motion vector of the adjacent block after applying to the adjacent block the refinement.

According to an alternative approach the method of the present invention includes checking whether a motion vector to be included into the list is already included in the list, and not including it into the list if affirmative; wherein said checking is not performed when including into the list a motion vector of an adjacent block to be processed at least partially in parallel with the processing of the current block.

According to an embodiment, the prediction of a current block includes intra-prediction step and further step of determining a set of reference samples for the current block including: detecting whether or not a motion vector of an adjacent block has been determined by the template matching; if detected negatively, including one or more samples of the adjacent block into the set of reference samples; and, if detected positively, not including any samples of the adjacent block into the set of reference samples. The step of intra-predicting the current block then includes providing the prediction of the current block according to samples from the set of reference samples.

The method of the present invention may include detecting whether or not a motion vector of a surrounding block, which is located within a predetermined rectangular region defined with respect to the position of the current block, has been determined by the template matching.

Moreover, a method for decoding a plurality of pictures from a bitstream may be provided, comprising the steps of parsing the bitstream including control information, performing the prediction determination for a current block as described above, and reconstructing the current block based on the prediction of the current block.

Still further, a method for encoding a plurality of pictures into a bitstream is provided, comprising: prediction determination for a current block as described above a bitstream former for including into the bitstream control information, and reconstructing the current block based on the prediction of the current block and storing the reconstructed block in a memory.

The control information includes advantageously a flag indicating whether or not the prediction unit is to detect whether or not a motion vector of an adjacent block has been determined by the template matching, and/or a replacement indicator indicating, if detected positively, how the prediction for the present block is determined.

The control information may be included in a sequence parameter set and/or in a slice header.

Moreover, an integrated circuit is provided embodying an apparatus as described above.

Furthermore, a program is provided, stored in a computer readable media, which, when executed on a processor, performs the steps of a method as described above.

### BRIEF DESCRIPTION OF THE DRAWINGS

In the following exemplary embodiments are described in more detail with reference to the attached figures and drawings, in which:
- Figure 1: is a block diagram showing an exemplary structure of a video encoder.
- Figure 2: is a block diagram showing an exemplary structure of a video decoder.
- Figure 3: is a block diagram showing an exemplary structure of an apparatus for determining a prediction for a picture block.
- Figure 4: is a schematic drawing of a current block and exemplary neighboring blocks which may be used for candidate list generation.
- Figure 5: is a schematic drawing illustrating decoder processing and possibility of parallelization if motion vector refinement is applied.
- Figures 6: is a block diagram illustrating inter-prediction unit according to an embodiment.
- Figure 7: is a schematic drawing illustrating decoder processing and possibility of parallelization if motion vector refinement is applied.
- Figure 8: is a flow chart illustrating a method for restricting the motion vector determination based on the motion vector determination of the neighbor blocks.
- Figure 9: is a schematic drawing illustrating an exemplary current block and its neighbors.
- Figure 10: is a schematic drawing illustrating an exemplary current block and its neighbor with a block adjacent to the neighbor.
- Figure 11: is a schematic drawing illustrating decoder processing and possibility of parallelization check skipping is applied.
- Figure 12: is a schematic drawing illustrating an exemplary current block and its neighbors for predicting the motion vector of the current block.
- Figure 13: is a schematic drawing illustrating an exemplary current block and its neighbors for intra predicting of the current block.
- Figure 14: is a schematic drawing illustrating an exemplary region for limiting the motion vector determination of a current block.
- Figure 15: is a schematic drawing illustrating an exemplary region for limiting the motion vector determination of a current block.
- Figure 16: is a schematic drawing illustrating errors that may occur in reception of a video sequence.
- Figure 17: is a schematic drawing illustrating errors that may occur in reception of a video sequence.

### DETAILED DESCRIPTION OF THE EMBODIMENTS

The present disclosure relates to determination of a prediction for a current block and in particular to inter-prediction. It may be employed in motion estimation applied during encoding and decoding of video. In the following, exemplary encoder and decoder which may implement the motion estimation employing the search space construction of the present disclosure are described in the following.

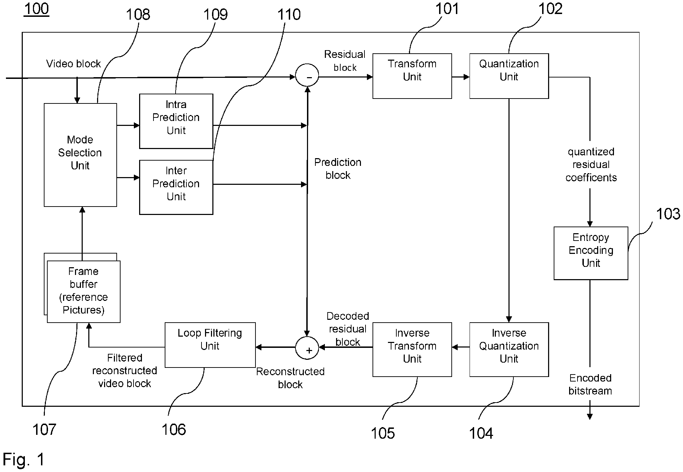

Fig. 1 shows an encoder 100 which comprises an input for receiving input blocks of frames or pictures of a video stream and an output for generating an encoded video bitstream. The term "frame" in this disclosure is used as a synonym for picture. However, it is noted that the present disclosure is also applicable to fields in case interlacing is applied. In general, a picture includes m times n pixels. This corresponds to image samples and may comprise one or more color components. For the sake of simplicity, the following description refers to pixels meaning samples of luminance. However, it is noted that the motion vector search of the invention can be applied to any color component including chrominance or components of a search space such as RGB or the like. On the other hand, it may be beneficial to only perform motion vector estimation for one component and to apply the determined motion vector to more (or all) components.

The input blocks to be coded do not necessarily have the same size. One picture may include blocks of different sizes and the block raster of different pictures may also differ.

In an explicative realization, the encoder 100 is adapted to apply prediction, transformation, quantization, and entropy coding to the video stream. The transformation, quantization, and entropy coding are carried out respectively by a transform unit 101, a quantization unit 102 and an entropy encoding unit 103 so as to generate as an output the encoded video bitstream.

The video stream may include a plurality of frames, wherein each frame is divided into blocks of a certain size that are either intra or inter coded. The blocks of for example the first frame of the video stream are intra coded by means of an intra prediction unit 109. An intra frame is coded using only the information within the same frame, so that it can be independently decoded and it can provide an entry point in the bitstream for random access. Blocks of other frames of the video stream may be inter coded by means of an inter prediction unit 110: information from previously coded frames (reference frames) is used to reduce the temporal redundancy, so that each block of an inter-coded frame is predicted from a block in a reference frame. A mode selection unit 108 is adapted to select whether a block of a frame is to be processed by the intra prediction unit 109 or the inter prediction unit 110. This block also controls the parameters of intra of inter prediction. In order to enable refreshing of the image information, intra-coded block may be provided within inter-coded frames. Moreover, intra-frames which contain only intra-coded blocks may be regularly inserted into the video sequence in order to provide entry points for decoding, i.e. points where the decoder can start decoding without having information from the previously coded frames.

The intra prediction unit 109 is a block prediction unit. For performing spatial or temporal prediction, the coded blocks may be further processed by an inverse quantization unit 104, and an inverse transform unit 105. After reconstruction of the block a loop filtering unit 106 is applied to further improve the quality of the decoded image. The filtered blocks then form the reference frames that are then stored in a frame buffer 107. Such decoding loop (decoder) at the encoder side provides the advantage of producing reference frames which are the same as the reference pictures reconstructed at the decoder side. Accordingly, the encoder and decoder side operate in a corresponding manner. The term "reconstruction" here refers to obtaining the reconstructed block by adding to the decoded residual block the prediction block.

The inter prediction unit 110 receives as an input a block of a current frame or picture to be inter coded and one or several reference frames or pictures from the frame buffer 107. Motion estimation and motion compensation are applied by the inter prediction unit 110. The motion estimation is used to obtain a motion vector and a reference frame based on certain cost function. The motion compensation then describes a current block of the current frame in terms of the translation of a reference block of the reference frame to the current frame, i.e. by a motion vector. The inter prediction unit 110 outputs the prediction block for the current block, wherein said prediction block minimizes the cost function. For instance, the cost function may be a difference between the current block to be coded and its prediction block, i.e. the cost function minimizes the residual block. The minimization of the residual block is based e.g. on calculating a sum of absolute differences (SAD) between all pixels (samples) of the current block and the candidate block in the candidate reference picture. However, in general, any other similarity metric may be employed, such as mean square error (MSE) or structural similarity metric (SSIM).

However, cost-function may also be the number of bits necessary to code such inter-block and/or distortion resulting from such coding. Thus, the rate-distortion optimization procedure may be used to decide on the motion vector selection and/or in general on the encoding parameters such as whether to use inter or intra prediction for a block and with which settings.

The intra prediction unit 109 receives as an input a block of a current frame or picture to be intra coded and one or several reference samples from an already reconstructed area of the current frame. The intra prediction then describes pixels of a current block of the current frame in terms of a function of reference samples of the current frame. The intra prediction unit 109 outputs a prediction block for the current block, wherein said prediction block advantageously minimizes the difference between the current block to be coded and its prediction block, i.e., it minimizes the residual block. The minimization of the residual block can be based e.g. on a rate-distortion optimization procedure. In particular, the prediction block is obtained as a directional interpolation of the reference samples. The direction may be determined by the rate-distortion optimization and/or by calculating a similarity measure as mentioned above in connection with inter-prediction.

The difference between the current block and its prediction, i.e. the residual block, is then transformed by the transform unit 101. The transform coefficients are quantized by the quantization unit 102 and entropy coded by the entropy encoding unit 103. The thus generated encoded video bitstream comprises intra coded blocks and inter coded blocks and the corresponding signaling (such as the mode indication, indication of the motion vector, and/or intra-prediction direction). The transform unit 101 may apply a linear transformation such as a Fourier or Discrete Cosine Transformation (DFT). Such transformation into the spatial frequency domain provides the advantage that the resulting coefficients have typically higher values in the lower frequencies. Thus, after an effective coefficient scanning (such as zig-zag), and quantization, the resulting sequence of values has typically some larger values at the beginning and ends with a run of zeros. This enables further efficient coding. Quantization unit 102 performs the actual lossy compression by reducing the resolution of the coefficient values. Entropy coding unit 103 then assigns to coefficient values binary codewords to produce a bitstream. The entropy coder also codes the signaling information (not shown in Fig. 1).

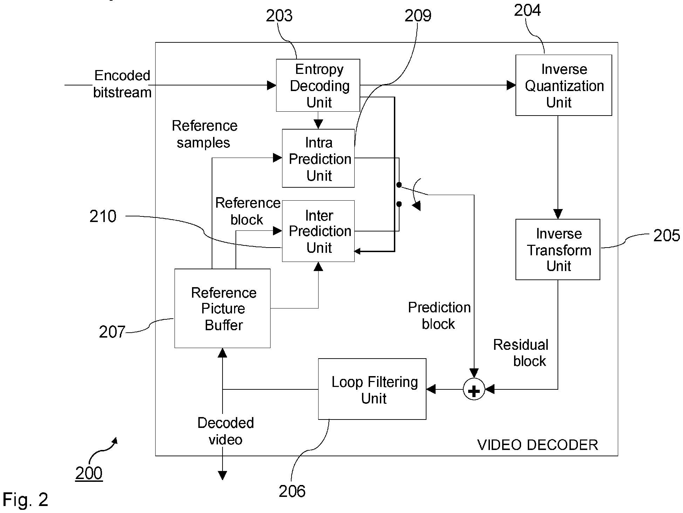

Fig. 2 shows a video decoder 200. The video decoder 200 comprises particularly a reference picture buffer 207 and an intra prediction unit 209, which is a block prediction unit. The reference picture buffer 207 is adapted to store at least one reference frame reconstructed from the encoded video bitstream, said reference frame being different from a current frame (currently decoded frame) of the encoded video bitstream. The intra prediction unit 209 is configured to generate a prediction block, which is an estimate of the block to be decoded. The intra prediction unit 209 is configured to generate this prediction based on reference samples that are obtained from the reference picture buffer 207.

The decoder 200 is adapted to decode the encoded video bitstream generated by the video encoder 100, and preferably both the decoder 200 and the encoder 100 generate identical predictions for the respective block to be encoded / decoded. The features of the reference picture buffer 207 and the intra prediction unit 209 are similar to the features of the reference picture buffer 107 and the intra prediction unit 109 of Fig. 1.

The video decoder 200 comprises further units that are also present in the video encoder 100 like e.g. an inverse quantization unit 204, an inverse transform unit 205, and a loop filtering unit 206, which respectively correspond to the inverse quantization unit 104, the inverse transform unit 105, and the loop filtering unit 106 of the video coder 100.

An entropy decoding unit 203 is adapted to decode the received encoded video bitstream and to correspondingly obtain quantized residual transform coefficients and signaling information. The quantized residual transform coefficients are fed to the inverse quantization unit 204 and an inverse transform unit 205 to generate a residual block. The residual block is added to a prediction block and the addition is fed to the loop filtering unit 206 to obtain the decoded video. Frames of the decoded video can be stored in the reference picture buffer 207 and serve as a reference frame for inter prediction.

Generally, the intra prediction units 109 and 209 of Figs. 1 and 2 can use reference samples from an already encoded area to generate prediction signals for blocks that need to be encoded or need to be decoded.

The entropy decoding unit 203 receives as its input the encoded bitstream. In general, the bitstream is at first parsed, i.e. the signaling parameters and the residuals are extracted from the bitstream. Typically, the syntax and semantic of the bitstream is defined by a standard so that the encoders and decoders may work in an interoperable manner. As described in the above Background section, the encoded bitstream does not only include the prediction residuals. In case of motion compensated prediction, a motion vector indication is also coded in the bitstream and parsed therefrom at the decoder. The motion vector indication may be given by means of a reference picture in which the motion vector is provided and by means of the motion vector coordinates. In order to efficiently code the reference picture, H.265 codec (ITU-T, H265, Series H: Audiovisual and multimedia systems: High Efficient Video Coding) provides a list of reference pictures assigning to list indices respective reference frames. The reference frame is then signaled in the bitstream by including therein the corresponding assigned list index. Such list may be defined in the standard or signaled at the beginning of the video or a set of a number of frames. It is noted that in H.265 there are two lists of reference pictures defined, called L0 and L1. The reference picture is then signaled in the bitstream by indicating the list (L0 or L1) and indicating an index in that list associated with the desired reference picture. Providing two or more lists may have advantages for better compression. For instance, L0 may be used for both uni-directionally inter-predicted slices and bi-directionally inter-predicted slices while L1 may only be used for bi-directionally inter-predicted slices. However, in general the present disclosure is not limited to any contet of the L0 and L1 lists.

The motion vector may be signaled directly by the coordinates in the reference picture. Alternatively, as also specified in H.265, a list of candidate motion vectors may be constructed and an index associated in the list with the particular motion vector can be transmitted.

Motion vectors of the current block are usually correlated with the motion vectors of neighboring blocks in the current picture or in the earlier coded pictures. This is because neighboring blocks are likely to correspond to the same moving object with similar motion and the motion of the object is not likely to change abruptly over time. Consequently, using the motion vectors in neighboring blocks as predictors reduces the size of the signaled motion vector difference. The MVPs are usually derived from already decoded motion vectors from spatial neighboring blocks or from temporally neighboring blocks in the co-located picture. In H.264/AVC, this is done by doing a component wise median of three spatially neighboring motion vectors. Using this approach, no signaling of the predictor is required. Temporal MVPs from a co-located picture are only considered in the so called temporal direct mode of H.264/AVC. The H.264/AVC direct modes are also used to derive other motion data than the motion vectors. Hence, they relate more to the block merging concept in HEVC. In HEVC, the approach of implicitly deriving the MVP was replaced by a technique known as motion vector competition, which explicitly signals which MVP from a list of MVPs, is used for motion vector derivation. The variable coding quadtree block structure in HEVC can result in one block having several neighboring blocks with motion vectors as potential MVP candidates. Taking the left neighbor as an example, in the worst case a 64×64 luma prediction block could have 16 84 luma prediction blocks to the left when a 64×64 luma coding tree block is not further split and the left one is split to the maximum depth.

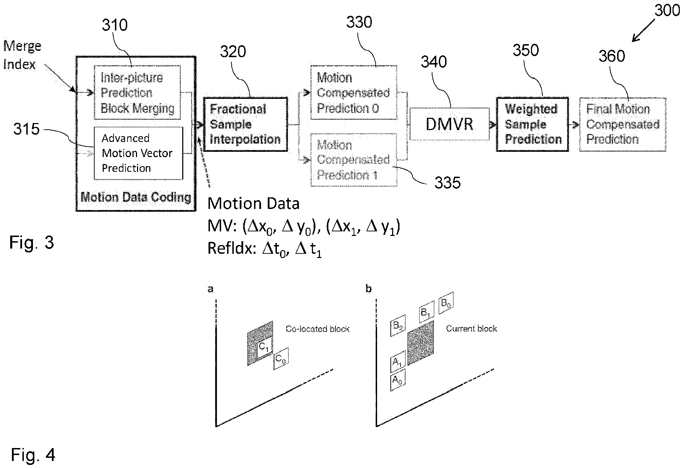

Advanced Motion Vector Prediction (AMVP) was introduced to modify motion vector competition to account for such a flexible block structure. During the development of HEVC, the initial AMVP design was significantly simplified to provide a good trade-off between coding efficiency and an implementation friendly design. The initial design of AMVP included five MVPs from three different classes of predictors: three motion vectors from spatial neighbors, the median of the three spatial predictors and a scaled motion vector from a co-located, temporally neighboring block. Furthermore, the list of predictors was modified by reordering to place the most probable motion predictor in the first position and by removing redundant candidates to assure minimal signaling overhead. The final design of the AMVP candidate list construction includes the following two MVP candidates: a) up to two spatial candidate MVPs that are derived from five spatial neighboring blocks; b) one temporal candidate MVPs derived from two temporal, co-located blocks when both spatial candidate MVPs are not available or they are identical; and c) zero motion vectors when the spatial, the temporal or both candidates are not available. Details on motion vector determination can be found in the book by V. Sze et al (Ed.), High Efficiency Video Coding (HEVC): Algorithms and Architectures, Springer, 2014, in particular in Chapture 5, incorporated herein by reference. The blocks used to generate the candidate list are shown in Figure 4: the co-located (zero) bock C1, the temporal neighbor C1 and the spatial neighbors A0, A1, B0, B1, B2, adjacent to the current block.

In order to further improve motion vector estimation without further increase in signaling overhead, it may be beneficial to further refine the motion vector derived at the encoder side and provided in the bitstream. The motion vector refinement may be performed at the decoder without assistance from the encoder. The encoder in its decoder loop may employ the same refinement to obtain corresponding reference pictures. The refinement is performed by determining a template, determining a search space and finding in the search space a reference picture portion best matching the template. The best matching portion position determines the best motion vector which is then used to obtain the predictor of the current block, i.e. the current block being reconstructed.

When the motion vector refinement is applied at the decoder side, also the decoder loop at the encoder side has to implement the motion vector refinement in order to generate the same reference pictures as will be generated and used at the decoder side. The motion vector derivation stage preceding the motion vector refinement usually requires knowledge of the motion vectors of the blocks spatially surrounding the current block being decoded, in particular in cases where the motion vector candidate list is used to select the estimation of the motion vector to be further refined. The motion vector candidate list for the current block is created based on the motion vectors of the blocks already decoded and adjacent spatially or temporally to the current block. This dependency of the motion vector determination on the availability of the motion vectors of the neighboring blocks makes parallelization of the encoding and/or decoding more difficult. Moreover, such dependency also reduces error resilience of the coded stream. In particular, in order to perform motion vector refinement, it is necessary to have reference pictures decoded correctly for the purpose of template matching. If the reference picture includes errors, they are further propagated. It is noted that the template matching is typically used for motion vector refinement. However, the present disclosure is also applicable to cases in which the template matching is applied to the motion vector determination.

Figure 3 shows an example of a structure of the inter-prediction units shown in Figures 1 and 2. At first, motion data are determined 310. This may be performed as described above by AMVP 315 by selecting motion vectors from a candidate motion vector list. As soon as motion vectors are determined, the fractional interpolation 320 may take place (especially if the motion vector or vectors point at fractional pixel position) and the predictors for the respective motion vectors are determined (330: direction 0 and 335: direction 1). Based on the determination of the predictors in the respective directions (i.e. reference pictures) a template is formed for matching performed during the decoder motion vector refinement block 340. The refined motion vectors are then weighted 350 to obtain 360 a motion compensated prediction of the current block.

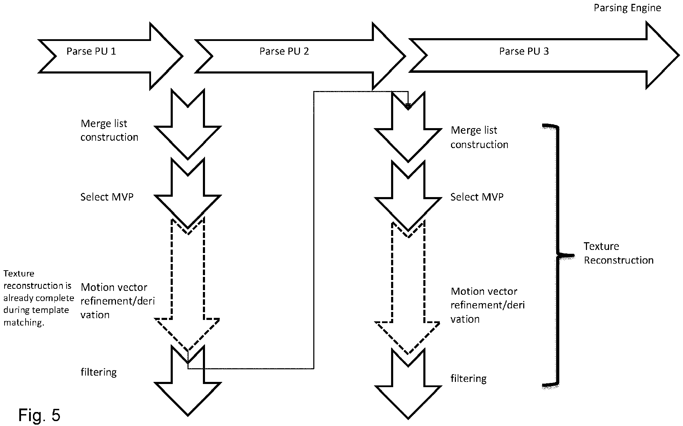

Figure 5 illustrates processing at the decoder, when motion vector refinement is applied. In particular, processing units PU1, PU2, PU3, etc. are parsed by a parsing engine one after another as shown on the top of Figure 5. The parsing engine may correspond to the entropy decoder 203 from Figure 2. Each parsed processing unit to be processed by the inter-prediction for reconstructing the texture of the picture block is provided to the inter-prediction block 210, which is illustrated by the vertical arrows. When looking at processing unit PU2 (right column of arrows), it can be seen that due to application of the refinement, parallel processing of PU1 and PU2 becomes almost impossible. In order to construct merge list (in general, a list of candidate motion vectors based on the already decoded blocks), the motion vectors of the neighboring blocks such as PU1 should be known. Since the motion vector refinement may be based on template matching which is computationally complex, and the motion vectors are known only after the refinement, PU2 cannot start motion vector derivation until all blocks of which the motion vectors are used in the merge list have been processed (PU1 in figure 5). In particular, for PU1 the merge list construction, selection of the initial motion vector for instance by using merge list index extracted from the bitstream, as well as the refinement are to be performed before the refined motion vector(s) is/are passed to processing of PU2 to generate the merge list. According to Fig. 5, the texture reconstruction is already complete during template matching performed here in the refinement step. Accordingly, after refinement, the motion vector of PU1 may be passed to processing of PU2. Filtering does not change the motion vector and is merely applied to the reconstructed PU1 in order to further improve its quality. The filtering may be for instance a deblocking filtering or any adaptive filtering.

As can be seen from this example, the processing of different processing units is almost sequential. Moreover, the motion vector refinement requires for its operation a search space formed of samples or fractional samples of the reference picture. Thus, if the reference picture is missing or decoded with artifacts, this may have an influence in terms of quality on the decoding of the current block. Thus, the decoding shown in Figure 5 illustrating the decoder processing of inter-prediction making use or motion vector refinement does not allow for efficient parallelization for different PUs and introduces some additional degradations caused by missing or wrongly decoded reference picture.

In other words, the decoder side motion vector derivation and refinement processes may cause 1) error resilience problems and parallelization problems. Certain use cases require that the error propagation in spatial and temporal direction needs to be controllable (can be confined within a known region or can be recoverable by taking certain measures). The prior art methods have the problem that, if there is an error in the transmission, the reconstruction error propagates uncontrollably in the temporal and spatial directions.

Regarding the decoder side parallel processing issue, the decoder side MV derivation and refinement tools are computationally intensive as they require template matching operations inside a large candidate point space. Therefore it is necessary to be able to do the derivation and refinement operations in parallel for neighboring PUs to increase the throughput.

The term PU (processing unit) here refers to a picture unit such as block which is processed by the inter-prediction. The PUs of one picture may also have different sizes.

Current codecs such as H.265/HEVC provide some resilience features such as disabling motion vector prediction for certain use cases. For instance, the motion vector of a temporally collocated block is not used for MV prediction, if a flag in the bitstream indicates so. Moreover, parallel merge estimation for encoder decision is enabled. Section 5.2.2.5 "Merge Estimation Regions for Parallel Merge Mode Estimation" of the book "High Efficiency Video Coding (HEVC), Vivienne Sze, Madhukar Budagavi, Gary J. Sullivan", Springer, 2014 explains the technique in detail. In particular, a window (motion estimation region, MER) is defined, where the blocks that fall in the region are not allowed to inherit motion information from each other. In other words, if two blocks (current and the neighbor blocks) are in the same MER, the motion information of neighbor block is not included in the merge list of the current block, in order to improve parallel processing ability.

In order to improve the possibility of parallelization and, at the same time, provide for higher error resilience, according to the present disclosure, template matching is only applied to determine the motion vectors of a current block, if the neighboring block has not obtained the motion vector by template matching.

Accordingly, since blocks which use template matching, are not used further to decode adjacent blocks, the adjacent blocks may be decoded during the processing of the blocks decoded using the template matching. Moreover, since the adjacent blocks do not use blocks reconstructed by template matching, they may be decoded even if reference picture necessary for template matching is missing or damaged.

The invention may also limit prediction from spatial neighbour blocks, if the neighbour block applies motion derivation or refinement based on template matching. It may limit prediction from a temporal neighbour block, only if the block applies derivation or refinement and these two techniques can be applied together. The HEVC currently provides two different approaches for aiding error resilience and parallelization as mentioned above. It completely disables motion information prediction or inheritance within a predefined window. As a result it trades coding gain with parallel processing capability.

In some embodiments, the motion information of a neighbouring block is replaced with a non-optimal version to be used by the current block for prediction (possibly if they are located inside the same window). Since the prediction is not completely disabled, the coding loss is much lower. The current invention applies to neighbouring blocks that apply motion derivation or refinement. If a neighbouring block does not use derivation or refinement process, the motion information can be inherited (or used as predictor) by the current block.

An exemplary apparatus according to an embodiment for determining a prediction of a current block, for reconstruction of the current block, comprises: a prediction unit for detecting whether or not a motion vector of a block adjacent to the current block has been determined by the template matching. If detected negatively, derive prediction of the current block according to the adjacent block. On the other hand, if detected positively, not to derive prediction of the current block according to the adjacent block.

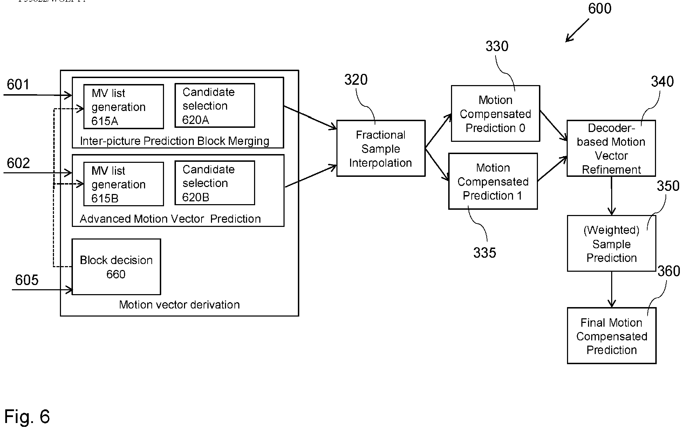

This is illustrated in Figure 6, in which the inter prediction unit such as 210 of Figure 2 further implements the detection whether to use a neighbor block for prediction. This may be accomplished by the block decision unit 660 added to the inter-prediction device 600 corresponding to the inter-prediction device 300 of Figure 3.

### Example 1: Replacement vector

According to a first example, the invention may be applied to the determination of motion vectors on the basis of a list of candidates formed from the motion vectors of neighboring blocks. Thus, the above mentioned apparatus for determining prediction of a current block is further configured for determining a motion vector to determine inter-prediction of a current block. For the purpose of reconstruction of the current block, the prediction unit comprises a motion vector list determination unit 615A, 615B for forming a list of candidate motion vectors for the current block, the forming of the list including:
- Detecting, by the block decision unit 660, whether or not a motion vector of an adjacent block has been determined by the template matching,
- if detected negatively, including the motion vector of the adjacent block as a candidate into the list,
- if detected positively, not including the motion vector of the adjacent block as a candidate into the list.

The apparatus may further comprise a motion vector determination unit 620A, 620B for selecting an estimate of a motion vector from the list and determining the motion vector of the current block according to the estimate.

In particular, the list determination unit 615A, 615B may be configured to, if detected positively, including a replacement motion vector as a candidate into the list.

As can be seen in Figure 6, the motion vector derivation includes Inter-picture prediction block merging block as well as advanced motion vector prediction. However, the present disclosure is also applicable if only one of these approaches / blocks is provided, or if any other motion vector derivation approach is used, which is based on two steps namely motion vector list generation and selection of a motion vector from the list. The block decision unit 660 receives at its input the information 605 of the prediction type/mode of the neighboring (previously decoded and spatially or temporally immediately or diagonally adjacent) block. Based thereon, it determines whether or not the current block's motion vector will be used to construe the MV list (615A and/or 615B).

The AMVP unit receives on its input 602 information concerning the difference between motion vector prediction and the motion vector as determined by the encoder and signaled in the bitstream. The MV list 615B is generated in accordance with the decision of the block decision unit 660 and candidate selection 620B is performed by selecting the motion vector prediction from the list. Similarly, the Inter-picture Prediction Block Merging (IPBM) includes merge list generation 615A in accordance with the control by the block decision unit 660 and selection 615A of the best candidate from the merge list. The interpolation 320 may, but in general does not have to be performed. The prediction is then calculated either based on a single motion vector (in such case only one of the two units 330 and 335 is used) or based on 2 MVs in the units 330 and 335 respectively. It is noted that in general, only one of the units 330 and 335 may be implemented, if no bi-prediction is supported. These blocks 320-360 work as in those described with reference to Figure 3.

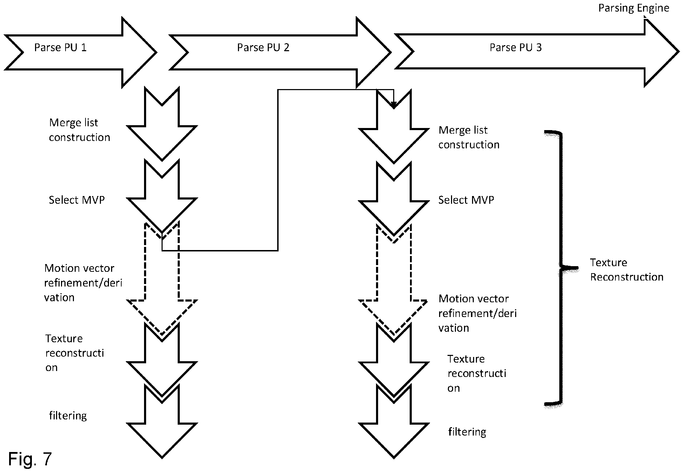

Figure 7 illustrates an example, in which a motion vector refinement unit 340 for applying a refinement of the selected estimate of the motion vector is also included in the apparatus. Moreover, the motion vector candidate list determination unit 615 is configured to, if detected positively, include into the list an estimate of the motion vector of the adjacent block obtained by the template matching before applying the refinement and the motion vector determination unit 310 is further configured to determine the motion vector of the adjacent block according to the estimate of the motion vector of the adjacent block after the refinement. In other words, in this example, the non-refined version of the motion vector, in general terms it is the motion vector estimate before template matching, is stored in a memory for further use by the reconstruction process of a following processing unit. The refined versions of the motion vectors are used for sample reconstruction process of the current coding block, possibly followed by a filtering process.

Figure 7 shows parsing of the processing units similar to the example of Figure 4. However, when processing PU1, the unrefined motion vector which is selected for PU1 adjacent to PU2 is output to the processing process of PU2. In particular PU2 uses the non-refined motion vector of PU1 to form its motion vector candidate list. At the same time, the PU1 processing continues by motion vector refinement, reconstruction of the texture (prediction of the current block on the basis of the refined motion vector) and filtering. It is noted that the stage of filtering may be omitted. As can be seen, the motion vector candidate list of PU2 may now be formed and the motion vector selection and refinement done while PU1 is still processed. Accordingly, parallelization on the inter-prediction processing level is possible for the neighboring processing unites. At the same time, since the motion vector selected for PU1 before refinement does not depend on availability/correctness of the reference picture. Thus error propagation from PU1 to PU2 does not take place, leading to increased error resilience.

In other words, in Figure 7, the PU1 uses the output of the derivation/refinement process for texture reconstruction and filtering processes. The PU2 (which is a neighbor of PU1) does not use the output of the derivation/refinement (of PU1) for MV prediction. Instead it uses a non-optimal version (which can be obtained before refinement/derivation process is complete) for MV prediction.

It is noted that one of the advantages provided by Example 1 is that parallelization is enabled. However, not each encoder/decoder must necessarily make use parallelization. It is another advantage that the encoder/decoder may select whether or not parallelization will be performed. When the parallelization is performed, the motion vector list determination unit is configured to form the list for the current block while the motion vector refinement unit applies refinement to the adjacent block.

The above part of the first example does not distinguish between the type of neighborhood, in particular whether the neighboring blocks are immediately adjacent to the current block within temporal or spatial domain. It may provide some additional advantages to make this distinction. In particular, motion vectors of the temporally preceding neighbors (in the decoding order) are typically available when the motion vector list is formed for the current block. Accordingly, if only the advantage of parallelization is targeted, it may be beneficial to include the temporally neighboring blocks into the motion vector list even if they were obtained by applying template matching and more specifically in terms of this example, if they were refined.

Thus, correspondingly, the motion vector list determination unit may be configured to, if detected positively,
- if the adjacent block is located in the same picture as the current block, include into the list an estimate of the motion vector of the adjacent block obtained by the template matching before applying the refinement, and
- if the adjacent block is located in a picture other than the current block, include into the list the motion vector of the adjacent block after applying to the adjacent block the refinement.

Since the temporal reference picture is reconstructed before the current picture, referring to the refined motion vectors in the temporal reference picture would not slow down the reconstruction of the current picture. Each processing unit that applies motion vector refinement stores two candidates for later prediction, namely: non-refined motion vector to be used by spatial neighbors for motion vector prediction by later (in decoding order) processing units and a refined motion vector to be used if temporal motion prediction by the later blocks as well as by motion compensation and possibly filtering of the current processing unit. As mentioned above, usage of the replacement instead of performing template matching may slightly decrease the coding efficiency.

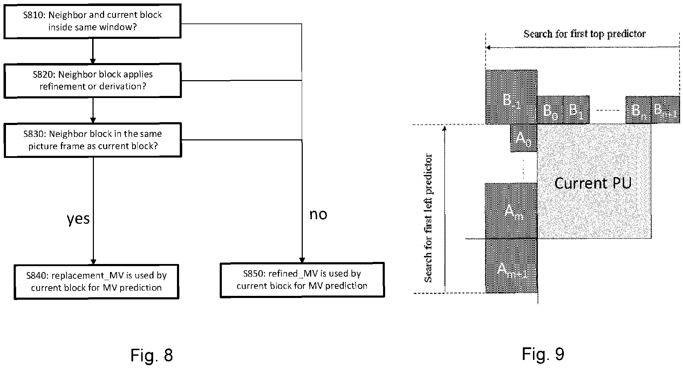

Figure 8 illustrates an exemplary method illustrating the above described approach. In particular, in step S810, it is determined whether the current block and a one of its neighbors is located within the same window. The window may be, for instance, a spatial window. In this example, the window may be the entire picture. Accordingly, it may be tested if the current and neighboring blocks are within the same window. If not ("no" in step S810), then the refined motion vector is used by the current block for motion vector prediction, e.g. the refined motion vector of the neighboring block is included into the list of candidate motion vectors in step S850.

Otherwise, if the neighboring block and the current block are located within the window, in step S820 it is tested whether or not the neighboring block applies refinement or derivation of motion vector by utilizing template matching. If "no", i.e. if the neighboring block has not a motion vector determined by the template matching, then step S50 follows, meaning that refinement is performed for the current block. On the other hand, if the neighboring block applies refinement or derivation of motion vector with template matching, it is further tested in step S830 whether the current block and the one of its neighbors belong to the same picture. Accordingly, if the current block and the neighboring block are not within the same picture ("no" in step S830), then the refined motion vector is used by the current block for motion vector prediction, e.g. the refined motion vector of the temporally neighboring block is included into the list of candidate motion vectors in step S850. If, on the other hand, in step S830 the answer is "yes", in step S840, a replacement motion vector is used by the current block for motion vector prediction.

In the above example, the steps S810 and S830 appear to test the same condition. However, in the following example, further spatial window possibilities are discusses for Step 810. Moreover, it is noted that the test in step S830 may also test a temporal window, i.e. test whether the neighboring block in the decoding order is located less than k pictures in decoding order from the current picture in which current block is located. It is noted that the decoding is in general considered to be the same as an encoding order. In other words, the decoding order is given by the encoding order defined by the encoder side and the generated bitstream structure. Thus, when referring to the decoding order in this example, reference could be made to the encoding order instead.

In the above example of Figure 7, the replacement motion vector has been determined by the non-refined motion vector. However, the present disclosure is not limited to such an approach. Rather, the replacement may be defined in any way.

However, the replacement motion vector is not necessarily a motion vector of the neighboring block before refinement. For instance, in an exemplary embodiment, the replacement motion vector is a motion vector of a block neighbor to the current block and different from the adjacent block.

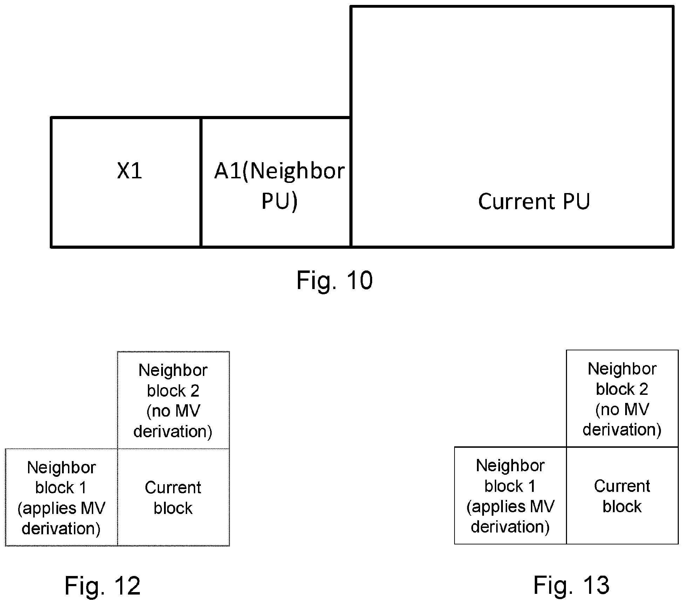

Figure 10 illustrates a current PU which has a neighbor PU referred to as A1 and A1 has a neighbor PU referred to as X1. If neighboring block A1 applies motion vector derivation / refinement (template matching), then a list of candidate motion vectors is constructed for PU A1 using the spatial and/or temporal neighbors of A1 (e.g. X1). A candidate motion vector for the current PU is then selected or computed from the list of candidates constructed for the neighboring block A1. The selected or computed candidate A1_MV_replacement can differ from the motion vector which will be output of the motion vector determination for A1. Here, selection means selection out of a list of possible candidates. Computation of the motion vectors obtains motion vector in another manner, e.g. by averaging motion vectors of more than one candidate or calculating motion vector in any other way based on candidate MVs or without referring to candidates. Advantageously, A1_MV_replacement has not been obtained by template matching. However, it is noted that since X1 is not a direct neighbor to the current PU, according to an implementation, the A1 MV_replacement may also be determined using template matching as A1_MV_replacement is likely available when decoding the current PU, so that parallel processing of the current PU and, for instance A1, is still possible.

According to an example, X1 is an adjacent block of A1 on its left side but X1 is not adjacent to the current processing unit. Nevertheless, any other block in the proximity of A1 or in A1's temporal neighborhood may be used. The motion vector of X1 may be used as A1_MV_replacement.

In general, a candidate list (set) of the current PU is formed by listing therein motion vectors of some neighboring PUs. It a spatially and/or temporally neighboring PU of which the motion vector is to be included into the candidate list of the current PU is determined by template matching, then a replacement vector is included into the candidate set of the current PU instead. This replacement vector, according to one example is a motion vector from the candidate list of that spatially and/or temporally neighboring PU. The replacement vector may in general be an already refined motion vector or a motion vector determined without template matching (for instance by motion vector prediction based on bitstream signaling).

Figure 9 shows another exemplary embodiment of the replacement motion vector. According to this exemplary embodiment, when constructing the candidate list for the current PU, a motion vector of a neighboring block to be included into the candidate list but is determined using template matching is replaced by a motion vector of the following candidate motion vector to be included into the list. For instance, Figure 9 shows current PU with neighbors A0 to Am+1 on the left side and neighbors B-1 to Bn+1 on the top.

As can be seen in Figure 9, in general (in any of the examples disclosed herein), the PUs to be processed may have different sizes. Accordingly, the current PU may have several spatial neighbors and also several temporal, and even at least partially co-located, neighbors (in previously decoded pictures).

Moreover, according to one implementation which can be also applicable to any of the examples and embodiments disclosed herein, the candidate list construction for each PU is performed in a predefined manner, for example defined in a standard. For instance, the candidate list may be constructed by included therein motion vectors of the current PU's neighbors according to a predefined order. The candidate list may have a fixed size. Such rule for creating the candidate list enables the encoder and decoder to work in a compatible way. For instance, the predefined order may be motion vectors A0 to Am+1 followed by the motion vectors of B-1 to Bn+1 followed by motion vectors C0 to Cp in a previously decoded (directly adjacent) picture. Here, m is the number of left-side neighbors, n is the number of top neighbors and p is the number of temporal neighbors. However, it is noted that the manner in which the candidate list is constructed is not necessarily entirely defined in the standard. It may be at least partially determined by the video sequence related signaling within the bitstream. Moreover, according to the predefined rule, motion vector of all neighbors shown in Figure 9 and/or the temporal neighbors are not necessarily included into the list. The rule may define only several of the neighbors and may but does not necessarily have to include temporal neighbors. Moreover, it is noted that the list does not have to include directly the motion vectors of the neighboring blocks. It may also include motion vectors computed from the motion vectors of the neighboring blocks (for instance an average of two motion vectors of mutually adjacent neighbors or the like).

In this exemplary embodiment, the candidate list is constructed for the current PU. If a motion vector of Am+1 is to be included into the list (according to the predefined rule) but has been determined by template matching, then instead of the motion vector of Am+1, the motion vector of the PU following Am+1 in the candidate list of the current PU is used as a replacement for the motion vector of Am+1. In this example (see the above mentioned sequence of the blocks), the replacement vector would be B-1. As mentioned above, the predefined rule may define a different ordering such as Am+1 to A0, B-1 to Bn+1, C0. In such case, the next block following Am+1 would be Am so that the motion vector of Am+1 would be replaced by the motion vector of Am in the list of candidates for the current PU.

It is noted that in case all neighbor block use template matching to derive their respective motion vectors and thus, the motion vector of the current block cannot be determined by taking motion vector of another neighbor, then, according to an embodiment, the current block shall not apply template matching for the motion vector derivation or refinement. Alternatively in such a case a predefined set of MV candidates can be used to construct the MV predictor candidate list. Such a predefined set might include MVs that are zero in x- and y- axes. Similarly, if there is no neighbor of the neighboring block which may be used to determine the motion vector, the current block will be predicted differently. As an example it might be predicted using intra prediction instead of inter prediction.

In the above exemplary implementations, a candidate motion vector of a current processing unit determined by template matching is replaced by a replacement vector in the list of candidates. Several examples for providing the replacement vector have been shown above, which enable parallel processing of the neighboring processing units and/or increase error resilience.

### Example 2: Region limitation

According to a second example, which is combinable with the first example and/or with any of the following examples, a block which is within an N × M samples large region cannot use refined motion vector candidates (or, in general, motion vector candidates determined by applying template matching) from a neighbor block which is also located within the same region. On the other hand, the block may use refined motion vector candidates from surrounding or even neighbor blocks which are not located within the same region.

In other words, the prediction unit may be configured to, for reconstruction of the current block, detect whether or not a motion vector of a surrounding block, which is located within a predetermined region defined with respect to the position of the current block, has been determined by the template matching. The region may be rectangular or even square. However, the present disclosure is not limited thereby and the region may have any other shape.

This approach is illustrated in Figure 8, step S810, in which it is determined whether or not the neighbor block and the current block are located inside the same window. This window may be the region of N x M samples.

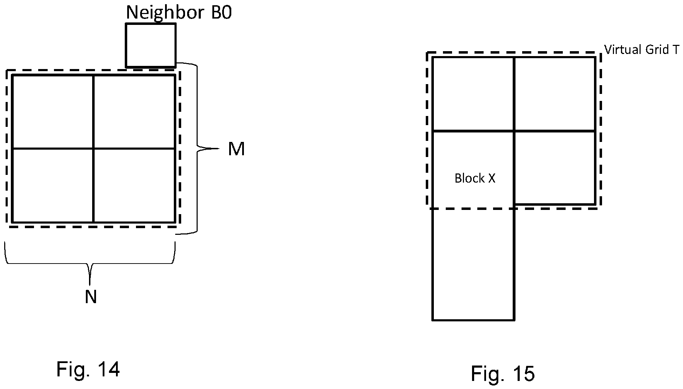

Figures 14 and 15 show examples of the regions according to the second example.

In particular, Figure 14 shows a rectangular region of N × M samples. Motion vectors of blocks located within this region cannot be used to derive motion vectors of blocks located within the same region especially if the derivation includes template matching. On the other hand, motion vectors of blocks located outside the region such as block B0 may be used to derive motion vectors of the block in the region, even if the block in the region an block B0 are neighbors. This approach enables parallel processing of the blocks which are within the same region. The region for a current block may advantageously be defined relatively to the location of the current block. In the example of Figure 14, the definition of "within the region" means that the entire block (current and/or neighbor), i.e. all its samples, are located in the region. However, this is only a convention which does not have any effective consequence on the operation of this example.

Figure 15 shows another example, in which the position within the region is determined only by the location of the top-left sample of the neighboring or current block. The dashed line, as in the previous example, shows the region N × M sample large (virtual grid T). Now, block X which is a rectangular block overlapping with the region but not completely located within the region is also consider to fall into the region since its top left corner is located within the region.

It is also noted that in general the region does not have to be determined with respect to the top left position of a block but may be determined with respect to any position of the block such as central position.

In summary, a current block that is within the N × M region cannot use motion vectors of blocks located in the same region and processed by derivation and/or refinement based on template matching. Instead, the block can use, for instance, a replacement motion vector as described in Example 1 above. For instance the replacement vector is a motion vector of the neighbor block within the region before the refinement, or it is a motion vector of a neighbor (not adjacent to the current block) to the neighbor block, or it is a motion vector of another neighbor block.

The current block within the N × M region can use motion vectors of blocks located outside the region irrespectively of how they are determined. This rule applies irrespectively of how the term inside/outside of the region is defined (whether all pixels of the block or only the reference point such as top left pixel of the block has to be within the region).

### Example 3: Skipping the checks

According to a third example, the motion vector of a neighboring block determined by template matching is still included into the candidate list of the current block.

The construction of a candidate list such as merge list or AMVP list may include checking the motion information of multiple neighboring blocks and adding it into the candidate list after the redundancy check is performed. The merge list construction and AMVP (Advanced Motion Vector Predictor) list construction processes (as described in the standard HEVC/H.265 and, for instance, in the above mentioned book by V. Sze et al, Section 5.2.1 and 5.2.2 incorporated herein by reference) refer to construction of 2 lists of motion vector predictors that are inherited from temporal and spatial neighbor blocks. Selection of the neighnoring blocks for inheriting the motion vectors are different (different algorithms are employed) for the two lists. Moreover, once the motion vector predictor is selected, no additional motion vector difference is signaled in the bitstream, if the merge list is used. On the other hand MV difference is signaled for the AMVP candidate.

The redundancy check that is mentioned in the above paragraph refers to identifying motion information that is same for 2 neighboring blocks. In other words, during the merge or AMVP list construction processes, before a motion vector is added to the list, it is compared with the already existing candidates (with all of them or with a selected subset) in the list and is left out of the list if there is an identical candidate already in the list (or in the selected subset). The redundancy checking operation might include comparing 2 motion vectors, or whole motion information (reference picture index, prediction mode (uni- or bi-prediction, and motion vectors that point to the reference pictures that are used).

However, in order to enable parallel processing of the neighboring processing units, the refined motion vectors are not checked for redundancy in motion vector candidate list construction. This approach has the advantage that the candidate list (such as merge list or AMVP list) can be constructed without knowing the actual value of the refined or derived motion vectors. The actual motion vector reconstruction still needs to wait for the derivation and/or refinement process.

Accordingly, the motion vector candidate list determination unit is further configured to check whether a motion vector to be included into the list is already included in the list, and not including it into the list if affirmative, and said checking is not performed when including into the list a motion vector of an adjacent block to be processed at least partially in parallel with the processing of the current block.

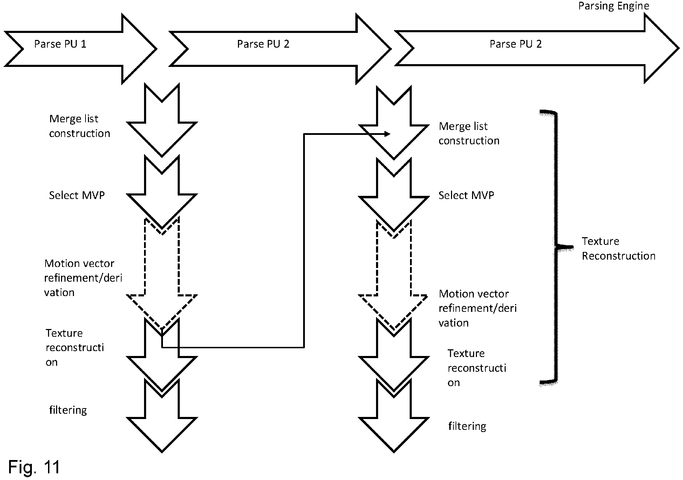

This is illustrated in Figure 11. In Figure 11, a motion vector of processing unit PU1 is determined including derivation and refinement. Then, the refined motion vector is entered into the motion vector candidate list. In this example, the redundancy checking process is skipped. Thus, candidate list of a current block can be constructed before the motion vector refinement process is completed in a neighboring block. Once the refinement process is completed, the refined motion vector of PU1 is included into the pre-constructed candidate list of PU2. In other words, the candidate list construction does not need to wait for the motion vector of PU1 but may be completed with motion vector candidates of other blocks. The motion vector of PU1 is then added before the motion vector selection step for PU2 is performed. The texture reconstruction and filtering of PU1 (neighbor block) may be performed in parallel with the processing of PU2 (current block), in particular with the candidate list construction, motion vector selection / derivation and refinement.

In the above example, the merge list of PU2 can be constructed before motion vector derivation or refinement of PU1 is complete, since the actual values of the motion vectors of PU1 are not necessary for the merge list construction process anymore. Therefore PU1 can carry on with selecting the predictor candidate from the merge list. At this step if the predictor candidate is inherited from PU1 (which applies MV derivation or refinement), PU1 and PU2 still cannot be processed in parallel, since actual values of the motion vectors of PU1 are not available and it is required for MV derivation/refinement and texture reconstruction processes. However if the predictor candidate is inherited from PU3 (which does not apply MV derivation/refinement), then PU1 and PU3 can be processed in parallel, since the actual values of the motion vectors of PU3 are already known and available at this point in time. A decoder implementer can facilitate the invented method to speed up the decoding process in an opportunistic manner, i.e. by employing parallel CU reconstruction whenever possible.

### Example 4: Limited motion vector prediction

In the above examples, the motion vectors of neighboring blocks obtained by motion vector derivation and refinement applying template matching were not used as motion vector candidates for the current block. However, the present disclosure is not limited to examples in which the motion vectors for the current block are determined by selecting them from a list of candidates and/or further refining them.

According to a fourth example, the motion vector of a current block is predicted using the motion vector of a block adjacent to the current block (preferably directly spatially adjacent, but in general, temporally adjacent blocks may be used as well). The difference to the prediction may be signaled in the bitstream. Alternatively, decoder-based motion vector refinement process may be performed on the predicted motion vector.

Figure 12 illustrates a current block with one left neighbor block 1 of which motion vector has been determined by motion vector derivation and/or refinement based on template matching and with one top neighbor 2 of which the motion vector has not been determined by motion vector derivation and/or refinement based on template matching. According to the fourth example, if the current block applies template matching for determining motion vector, then it does not use motion vector of a neighbor block for motion vector prediction if the motion vector of the neighbor block was determined based on template matching. Thus, in Figure 12, motion vector of neighbor block 1 cannot be used for motion vector prediction of the motion vector of the current block. On the other hand, if the current block does not apply template matching for its motion vector determination, it can use motion vector of neighbor block 1 for instance for motion vector prediction (i.e. calculating motion vector of current block as a sum of a prediction determined based on the motion vector of the neighboring block or more neighboring blocks and a difference signaled in the bitstream).

In any case, the motion vector of the current block may be predicted on the basis of neighbor block 2 if template matching is not applied for determining motion vector of neighbor block 2. It is noted that motion vector prediction for the current block may be performed by taking as a prediction directly one motion vector of a neighbor block. However, the motion vector prediction may also be performed on the basis of a motion vector of a neighbor block, for instance by averaging motion vectors of several spatial and/or temporal neighbor blocks.

### Example 5: Limited intra prediction

According to a fifth example, the prediction unit comprises a reference sample determination unit for determining a set of reference samples for the current block including:
- detecting whether or not a motion vector of an adjacent block has been determined by the template matching,
- if detected negatively, including one or more samples of the adjacent block into the set of reference samples, and
- if detected positively, not including any samples of the adjacent block into the set of reference samples,

Moreover, the prediction unit includes an intra-prediction unit for providing the prediction of the current block according to samples from the set of reference samples.

This is illustrated in Figure 13, in which the current block is surrounded by one left neighbor block 1 of which the motion vector has been determined by applying template matching and one top neighbor block 2 of which the motion vector has not been determined or has not been determined by applying template matching. The current block is an intra-block, i.e. its prediction is to be determined by intra-prediction based on reference samples (pixels) of the surrounding blocks in the same picture. Since the neighbor block 1 applies motion vector derivation and/or refinement, the intra-prediction of the current block will not use samples of neighbor block 1. Since neighbor block 2 does not apply motion vector derivation and/or refinement, the intra-prediction of the current block may use reconstructed samples of neighbor block 2 for the intra-prediction.

As already mentioned above, even if Figures 12 and 13 show only one left and one top neighbor block, in general there may be more neighbor blocks as shown in Figure 9. In general, in the fifth embodiment, reference samples of blocks which used template matching to derive their motion vector(s) are not used for intra-prediction of the current block.

### Example 6: Signaling

In order to enable the encoder and the decoder to operate in the compatible way, a control signaling may be introduced into the bitstream which specifies whether and how the parallel processing and/or resilience are controlled as described above.

As already described with reference to figures 1 and 2, a video decoder for decoding a plurality of pictures from a bitstream may comprise a bitstream parser for parsing the bitstream including control information, the prediction unit as described in the above examples and a reconstruction unit for reconstructing the current block based on the prediction of the current block.

Moreover, a video encoder for encoding a plurality of pictures into a bitstream may comprise the prediction unit as described in the above examples, a bitstream former for including into the bitstream control information, and a reconstruction unit for reconstructing the current block based on the prediction of the current block and storing the reconstructed block in a memory.

The video encoder or decoder may operate with the control information which includes: a flag indicating whether or not the prediction unit is to detect whether or not a motion vector of an adjacent block has been determined by the template matching, and/or a replacement indicator indicating, if detected positively, how the prediction for the present block is determined.

In particular, the control flag may indicate whether or not the restriction according to the present disclosure is to be applied at all. If the flag indicates that it has not to be applied, then no check is performed and motion vectors of a current block may always be derived from the motion vectors of the neighbor blocks, irrespectively on how the motion vectors of the neighbor blocks themselves have been derived. Otherwise, one of the above embodiments and examples applies. Which one of the embodiments and examples is applied may be defined in a standard.

In addition, it is possible to select application of one of the above described embodiments and examples, for instance, a control signaling may be provided which indicates, how the replacement vector is to be determined (unrefined motion vector of the neighbor, motion vector of a neighbor of the neighbor or copy of a motion vector of another neighbor or anything else). Alternatively or in addition, the control signaling may specify whether one or more of the replacement vector (example 1), region limitation (example 2), skipping of checks (example 3), limited motion vector prediction (example 4) or limited intra-prediction (example 5) is to be applied. The size of the region may be signaled as well.

For instance, the control information is included in a sequence parameter set and/or in a slice header.

Here, the term "sequence parameter set" refers in general to any control information field that is recognized by the encoder and decoder as applicable to a plurality of pictures forming a sequence. In particular, in case of HEVC, this may be the Sequence Parameter Set (SPS) or the Picture Parameter Set (PPS). However, the present disclosure is not limited to HEVC and in general, any common signaling applicable to more than one pictures may be used. This may be control information used for the entire video or for a subset of video pictures.

Moreover, the term "slice header" here refers to the control information associated with a video (picture) slice. HEVC uses picture slices which may include the entire picture or a portion of a picture which may be parsed independently of other slices. Parsing here includes entropy decoding. In some cases, slice is also independently decodable, i.e. does not use information from other slices for the decoding using intra-prediction. However, in general, the control information may be provided in association with any picture portion to which related signaling is provided.

It is noted that the control signaling may be applied on both levels. For instance, a flag on whether or not to use the limitation at all may be signaled per slice, whereas the particular embodiment/example/region size may be signaled per plurality of pictures.

The motion vector determination including the motion vector refinement as described above can be implemented as a part of encoding and/or decoding of a video signal (motion picture). However, the motion vector determination may also be used for other purposes in image processing such as movement detection, movement analysis, or the like.

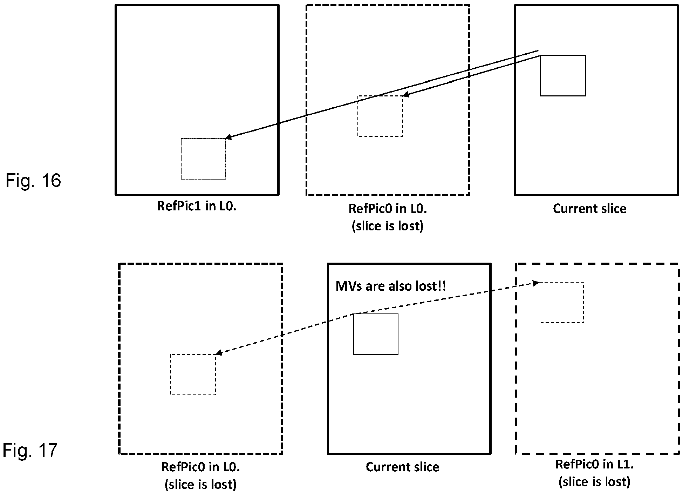

Figures 16 and 17 illustrate scenarios in which the present invention as described above may provide advantages related to better error resilience. According to Figure 16, a slice is lost which is necessary for reconstructing a portion of a reference picture to which a current block in a current slice points. In such cases, if the neighbors to the current block will also likely point to the lost slice portion. If the slice portion is concealed, there may be picture quality degradation. If it is retransmitted, there may be a higher decoder delay. According to some exemplary embodiments of the invention, the motion vectors of neighbors using the reference picture to determine the motion vector, are not used for the current block. Accordingly, there will be no error propagation or delay resulting from the slice loss.

In Figure 17, not only the reference picture is corrupt but also the motion vector of the neighboring blocks to be used in the candidate list of the current block or used for prediction of the motion vector of the current block. If a reference frame is lost, pixel samples in the current block cannot be reconstructed. Additionally motion vectors of the current block in current slice cannot be reconstructed in this example. All of the motion vectors in the current slice and in the proceeding slices are corrupted. Since following blocks in decoding order can use the lost MVs in MV prediction (merge, AMVP, etc.), the decoder has no easy way of recovery. The encoder has no means of controlling error propagation (the coding blocks that precedes current block in coding order can all be corrupted).

According the invention as described above, if one of the reference pictures in Figure 17 is lost, although the pixels of the current block are corrupted (due to the fact that the reference samples are lost), the motion vectors that are used by the block are guaranteed to be reconstructed correctly. Being able to reconstruct the motion vectors correctly (which is the benefit provided by the invented methods) provides the following 2 benefits:
- The decoder can employ error concealment algorithms. Since the consecutive pictures in a video sequence are highly correlated, an intelligent decoder can simply replace a lost picture with an available reference picture, scale the motion vectors accordingly and obtain a quite good prediction for the current block. This simple error concealment method is made possible due to the fact that the motion vector of the current block was able to be reconstructed correctly.
- Since the motion vector of the current block is likely to be used as motion vector predictor by the following coding blocks (within the spatial or temporal neighborhood), being able to reconstruct the motion vector of the current block guarantees that the motion vectors of the following coding blocks are also reconstructed correctly. As a result, a following coding block that has all of its reference pictures available (not lost) can now be reconstructed perfectly since its reference picture and motion vectors are all correct. If the invention is not applied, a lost reference picture causes both the current and the following coding blocks to have wrong motion vectors and the error propagates through the whole video sequence (as a result just one lost frame might cause the whole video sequence to be corrupted).

Summarizing, the present disclosure relates to inter-prediction in which it is determined whether or not a motion vector of a block neighbor to the current block has been determined by the template matching (as used for instance in decoder-based motion vector derivation and/or refinement). If detected negatively, prediction of the current block is derived according to the motion vector of the neighbor block. On the other hand, if detected positively, the prediction of the current block is not based on the neighbor block.

The motion vector determination may be implemented as an apparatus. Such apparatus may be a combination of a software and hardware. For example, the motion vector determination may be performed by a chip such as a general purpose processor, or a digital signal processor (DSP), or a field programmable gate array (FPGA), or the like. However, the present invention is not limited to implementation on a programmable hardware. It may be implemented on an application-specific integrated circuit (ASIC), or by a combination of software and one or more the above mentioned hardware components. In one example, the apparatus comprises a processor and a memory carrying a program, and the program, when executed by the processor, instructs the processor to carry out steps of the above described methods.

The motion vector determination may also be implemented by program instructions stored on a computer readable medium. The program, when executed, causes the computer to perform the steps of detecting whether or not a motion vector of an adjacent block has been determined by the template matching, if detected negatively, deriving prediction of the current block according to the adjacent block, and if detected positively, not deriving prediction of the current block according to the adjacent block. The computer readable medium can be any medium on which the program is stored such as a DVD, CD, USB (flash) drive, hard disc, server storage available via a network, etc.

The encoder and/or decoder may be implemented in various devices including a TV set, set top box, PC, tablet, smartphone, or the like. It may be a software, app implementing the method steps.

Although the invention has been described above mainly within the framework of motion picture video coding, the proposed techniques can be applied as well for coding (i.e. encoding or decoding) of any picture set comprising two or more pictures. The picture set may comprise, for example, a set of still pictures obtained in a medical imaging application, e.g., a sequence of computed tomography (CT) scan images. In the appended claims, the term "video" may therefore mean a motion picture sequence or any other picture set that comprises two or more pictures.

## Claims

1. A decoder for determining a prediction of a current block based on a motion vector prediction of the current block, the decoder being configured to:
**a.)** parse a control signaling from bitstream, wherein the control signaling specifying whether a first mode for determining the motion vector prediction of the current block is to be applied by the decoder or a second mode for determining the motion vector prediction of the current block is to be applied by the decoder;
**b.)** determine, based on the control signalling, whether the first mode or the second mode is to be applied by the decoder for determining the motion vector prediction of the current block;
**c.)** in case it is determined in step **b.**) that the second mode is to be applied by the decoder for determining the motion vector prediction of the current block:
**c1.)** if the motion vector of a block adjacent to the current block has been determined by template matching, not perform the checking, but add the motion vector of the block adjacent to the current block into a list, wherein the block is located in a picture other than the current block;
**c2.)** select a second motion vector from the list as an estimate of the motion vector prediction of the current block, determine the motion vector prediction of the current block according to the estimate, and perform the prediction of the current block based on the selected motion vector prediction of the current block.

2. A method for determining a prediction of a current block based on a motion vector prediction of the current block performed by a decoder, the method comprising the steps of:
**a.)** parsing a control signaling from bitstream, wherein the control signaling specifying whether a first mode for determining the motion vector prediction of the current block is to be applied by the decoder or a second mode for determining the motion vector prediction of the current block is to be applied by the decoder;
**b.)** determining, based on the control signalling, whether the first mode or the second mode is to be applied by the decoder for determining the motion vector prediction of the current block;
**c.)** in case it is determined in step **b.)** that the second mode is to be applied by the decoder for determining the motion vector prediction of the current block:
**c1.)** if the motion vector of a block adjacent to the current block has been determined by template matching, not performing the checking, but adding the motion vector of the block adjacent to the current block into a list, wherein the block is located in a picture other than the current block;
**c2.)** selecting a second motion vector from the list as an estimate of the motion vector prediction of the current block, determining the motion vector prediction of the current block according to the estimate, and performing the prediction of the current block based on the selected motion vector prediction of the current block.

3. An encoder for determining a prediction of a current block based on a motion vector prediction of the current block, the encoder being configured to:
**a.)** receive control signaling from an encoder, the control signaling specifying whether a first mode for determining the motion vector prediction of the current block is to be applied by the encoder or a second mode for determining the motion vector prediction of the current block is to be applied by the encoder;
**b.)** determine, based on the control signalling, whether the first mode or the second mode is to be applied by the encoder for determining the motion vector prediction of the current block;
**c.)** in case it is determined in step **b.)** that the second mode is to be applied by the encoder for determining the motion vector prediction of the current block:
**c1.)** if the motion vector of a block adjacent to the current block has been determined by template matching, not perform the checking, but add the motion vector of the block adjacent to the current block into a list, wherein the block is located in a picture other than the current block;
**c2.)** select a second motion vector from the list as an estimate of the motion vector prediction of the current block, determine the motion vector prediction of the current block according to the estimate, and perform the prediction of the current block based on the selected motion vector prediction of the current block.
**d.)** encode the control signaling into a bitstream.

4. A method for determining a prediction of a current block based on a motion vector prediction of the current block performed by an encoder, the method comprising the steps of:
**a.)** receiving control signaling from an encoder, the control signaling specifying whether a first mode for determining the motion vector prediction of the current block is to be applied by the encoder or a second mode for determining the motion vector prediction of the current block is to be applied by the encoder;
**b.)** determining, based on the control signalling, whether the first mode or the second mode is to be applied by the encoder for determining the motion vector prediction of the current block;
**c.)** in case it is determined in step **b.)** that the second mode is to be applied by the encoder for determining the motion vector prediction of the current block:
**c1.)** if the motion vector of a block adjacent to the current block has been determined by template matching, not performing the checking, but adding the motion vector of the block adjacent to the current block into a list, wherein the block is located in a picture other than the current block;
**c2.)** selecting a second motion vector from the list as an estimate of the motion vector prediction of the current block, determining the motion vector prediction of the current block according to the estimate, and performing the prediction of the current block based on the selected motion vector prediction of the current block.
**d.)** encoding the control signaling into a bitstream.

5. A decoding device, comprising:
a receiver configured to receive a coded video bitstream;
a memory coupled to the receiver, the memory storing instructions; and
a processor coupled to the memory, the processor configured to execute the instructions to cause the decoding device to perform the method in any of claims 1 to 2.

6. An encoding device, comprising:
a memory containing instructions;
a processor coupled to the memory, the processor configured to implement the instructions to cause the encoding device to perform the method in any of claims 3 to 4.

7. A bitstream comprising a control signaling, wherein the bitstream is **characterized by**:
wherein the control signaling specifying whether a first mode for determining the motion vector prediction of the current block is to be applied or a second mode for determining the motion vector prediction of the current block is to be applied by the decoder;
determine, based on the control signalling, whether the first mode or the second mode is to be applied for determining the motion vector prediction of the current block;
in case it is determined that the second mode is to be applied for determining the motion vector prediction of the current block:
if the motion vector of a block adjacent to the current block has been determined by template matching, not perform the checking, but add the motion vector of the block adjacent to the current block into a list, wherein the block is located in a picture other than the current block;
select a second motion vector from the list as an estimate of the motion vector prediction of the current block, determine the motion vector prediction of the current block according to the estimate, and perform the prediction of the current block based on the selected motion vector prediction of the current block.
